# EUROPEAN PATENT APPLICATION

(11) **EP 4 329 060 A1**
(43) Date of publication of application: **28.02.2024**
(21) Application number: 22791439.7
(22) Date of filing: 18.03.2022
(51) Int. Cl.: H01M 50/204, H01M 50/213, H01M 50/247, H01M 50/35

(54) **BATTERY PACK FOR POWER TOOL, AND POWER TOOL**

(30) Priority: 22.04.2021 JP 2021072892
(71) Applicant: Panasonic Holdings Corporation, Osaka 571-8501 (JP)
(72) Inventor: NISHII, Kazuhiko, Kadoma-shi, Osaka 571-0057 (JP); IKEDA, Masaki, Kadoma-shi, Osaka 571-0057 (JP); HAYASHI, Masahiko, Kadoma-shi, Osaka 571-0057 (JP); WATANABE, Takatoshi, Kadoma-shi, Osaka 571-0057 (JP); NISHIKAWA, Ryo, Kadoma-shi, Osaka 571-0057 (JP)
(74) Representative: Müller-Boré & Partner Patentanwälte PartG mbB
(86) International application number: PCT/JP2022/012696
(87) International publication number: WO 2022/224660

(57) **Abstract**

An object of the present disclosure is to provide a power tool battery pack and a power tool in which a further simplified structure reduces the concentration of gas in a housing. A power tool battery pack (1) includes a battery cell (11), a housing (12), a gas absorbing member (13), a lateral surface-side space (S1), and an electrode-side space (S2). The battery cell (11) has an end surface (111a, 111b) and a lateral surface (112), and the end surface (111a, 111b) is provided with electrodes (113). The housing (12) houses the battery cell (11). The gas absorbing member (13) is configured to absorb gas. The lateral surface-side space (S1) is a space between the lateral surface (112) and the housing (12). The electrode-side space (S2) is a space between the housing (12) and the electrodes (113). The gas absorbing member (13) is disposed, in the housing (12), in at least one of the lateral surface-side space (S1) or a space between the housing (12) and an intervention member (14) disposed in the electrode-side space (S2).

## Description

### Technical Field

The present disclosure generally relates to power tool battery packs and power tools. The present disclosure specifically relates to: a power tool battery pack including a battery cell; and a power tool.

### Background Art

Patent Literature 1 discloses a battery pack including a battery case and a valve on the battery case. The valve is configured to open when a secondary battery cell generates gas and builds up pressure in the battery case to a predetermined value or greater. Thus, in case of generation of the gas from the secondary battery cell, the valve allows the gas to escape outside.

The battery pack described in Patent Literature 1 allows gas in the battery case (housing) to escape outside through the valve. However, since the valve is disposed on the battery case, the structure of the battery pack is complex.

### Citation List

### Patent Literature

Patent Literature 1: JP 2016-143507 A

### Summary of Invention

It is an object of the present disclosure to provide: a power tool battery pack which has a further simplified structure configured to reduce the concentration of gas in a housing; and a power tool.

A power tool battery pack according to an aspect of the present disclosure includes a battery cell, a housing, a gas absorbing member, a lateral surface-side space, and an electrode-side space. The battery cell has an end surface and a lateral surface, and the end surface is provided with electrodes. The housing houses the battery cell. The gas absorbing member is configured to absorb gas. The lateral surface-side space is a space between the lateral surface and the housing. The electrode-side space is a space between the end surface and the housing. The gas absorbing member is disposed, in the housing, in at least one of the lateral surface-side space or a space between the housing and an intervention member in the electrode-side space.

A power tool according to an aspect of the present disclosure includes: the power tool battery pack; and a power tool body. The power tool body is configured to operate with electric power supplied from the power tool battery pack.

### Brief Description of Drawings

FIG. 1 is an exterior perspective view of a power tool battery pack of an embodiment;
FIG. 2 is an exploded perspective view of a configuration of the power tool battery pack;
FIG. 3 is a sectional view of the power tool battery pack taken along line A-A of FIG. 1;
FIG. 4 is a sectional view of the power tool battery pack taken along line B-B of FIG. 1;
FIG. 5 is a sectional view of the power tool battery pack taken along line C-C of FIG. 1;
FIG. 6 is an enlarged partial view of FIG. 4;
FIG. 7 is an illustrative view of a gap space provided for a gas absorbing member in the power tool battery pack;
FIG. 8 is a schematic view of a configuration of a power tool including the power tool battery pack; and
FIG. 9 is a sectional view of a power tool battery pack of a variation taken along line A-A of FIG. 1.

### Description of Embodiments

### (Embodiment)

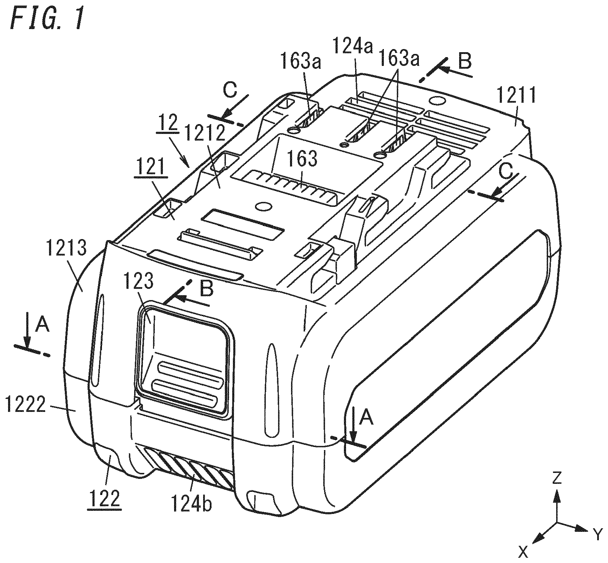

An embodiment of the present disclosure will be described below. The embodiment described below is a mere example of various embodiments of the present disclosure. Moreover, the embodiment below may be readily modified in various manners depending on a design choice or any other factor without departing from the scope of the present disclosure. FIGS. 1 to 9 to be referred to in the following description of embodiments are all schematic representations. Thus, the ratio of the dimensions (including thicknesses) of respective constituent elements illustrated on the drawings does not always reflect their actual dimensional ratio.

### (1) Overview

With reference to FIGS. 1, 2, 5, and 9, an overview of a power tool battery pack 1 (hereinafter referred to as a battery pack 1) according to the present embodiment will be described below.

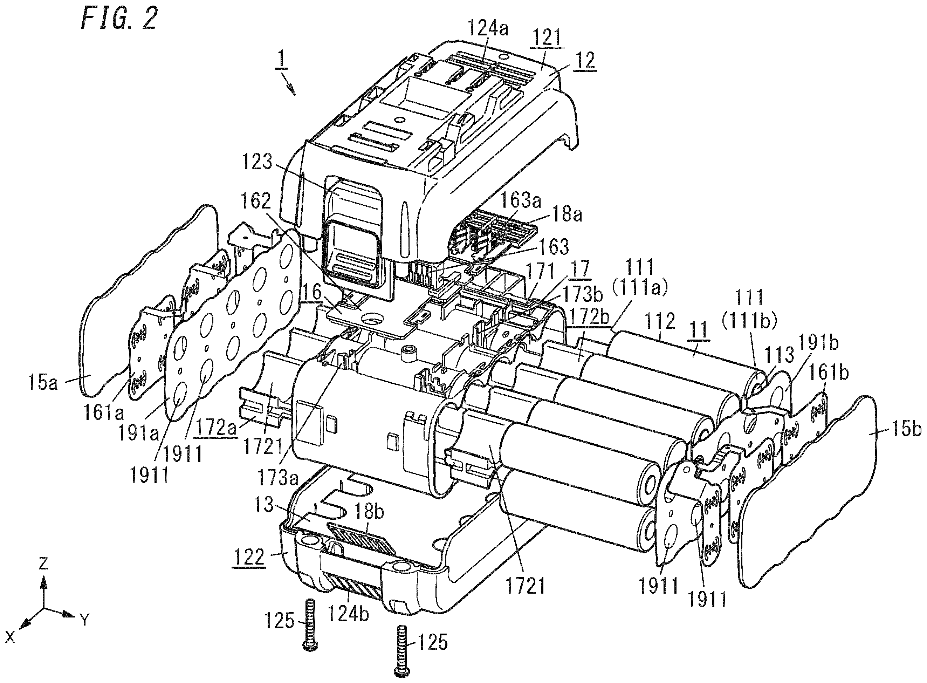

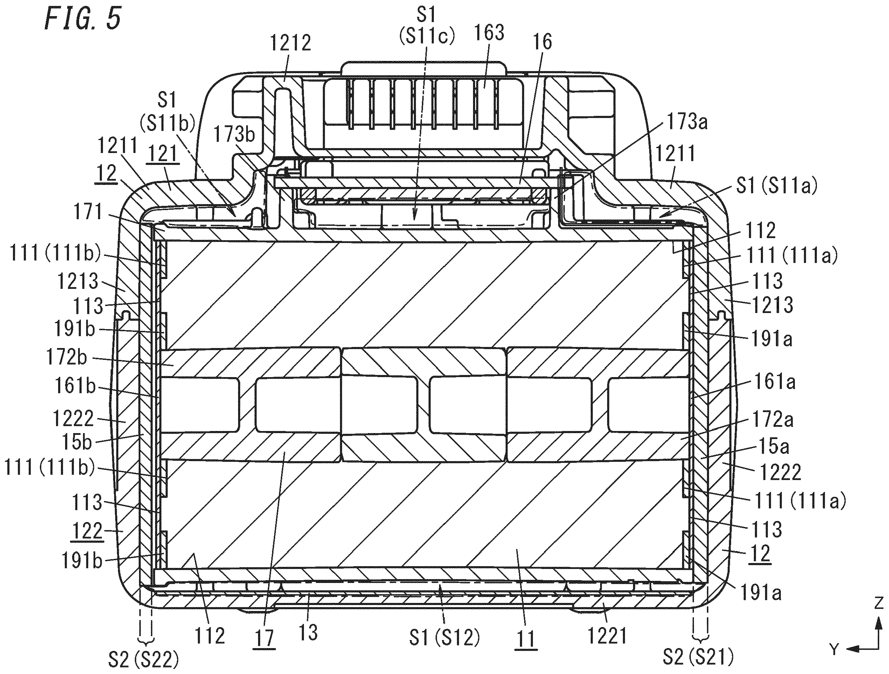

The battery pack 1 is a power storage apparatus for supplying electric power to a power tool body 2. As shown in FIGS. 2 and 5, the battery pack 1 includes a battery cell 11, a housing 12, a gas absorbing member 13, a lateral surface-side space S1, and an electrode-side space S2.

As shown in FIG. 2, the battery cell 11 has an end surface 111 and a lateral surface 112, and the end surface 111 is provided with electrodes 113. The battery cell 11 is a chargeable and dischargeable secondary battery. Examples of the battery cell 11 include a lithium-ion battery, a lead storage battery, an alkaline storage battery, or a nickel-hydrogen storage battery.

The housing 12 houses the battery cell 11. As shown in FIG. 1, the housing 12 is, for example, a case in the shape of a substantially rectangular parallelepiped. The housing 12 is made of, for example, a synthetic resin.

The gas absorbing member 13 absorbs gas. Examples of the gas include an inflammable gas. The gas absorbing member 13 is made of a resin mixture including a heat resistance resin and a gas absorbing material. Examples of the heat resistance resin include an amorphous resin having a glass transition temperature of higher than or equal to 200°C and particularly higher than or equal to 300°C. Note that the heat resistance resin may be a crystalline resin having a glass transition temperature of higher than or equal to 200°C and having no melting point, or having a melting point of higher than or equal to 250°C. Examples of the gas absorbing material include an inorganic porous material which is excellent in absorbency of a carbon hydride-based gas.

As shown in FIG. 5, the lateral surface-side space S1 is a space between the lateral surface 112 which the battery cell 11 has and the housing 12. The electrode-side space S2 is a space between the end surface 111 which the battery cell 11 has and the housing 12.

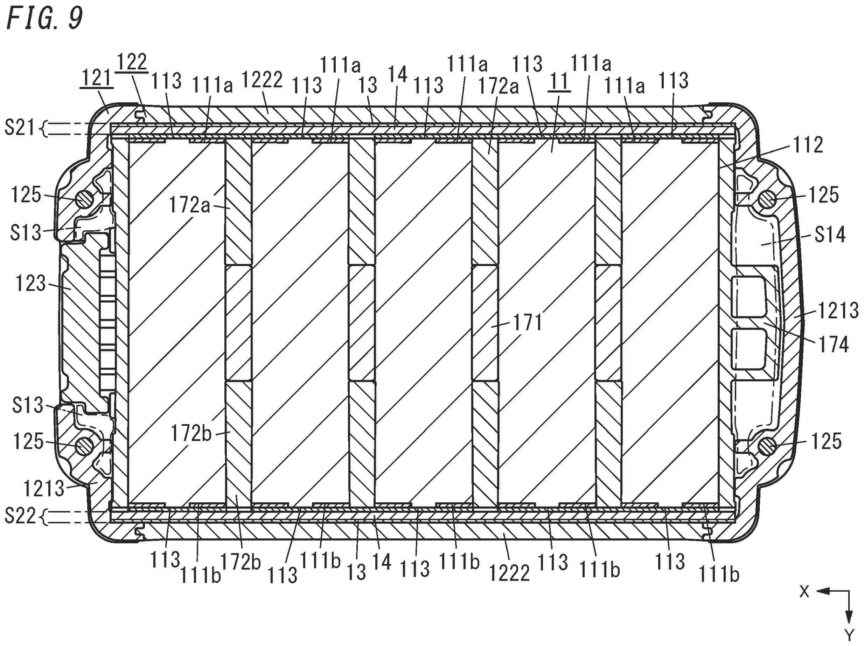

The gas absorbing member 13 is disposed, in the housing 12, in at least one of the lateral surface-side space S1 (see FIG. 5) or a space (see FIG. 9) between the housing 12 and an intervention member 14 disposed in the electrode-side space S2. Thus, for example, when gas is generated from the battery cell 11, the gas is absorbed by the gas absorbing member 13 disposed in the housing 12.

To suppress heat generated by the electrode 113 from being transmitted to the gas absorbing member 13, the intervention member 14 shown in FIG. 9 is made of, for example, a refractory material which is more refractory than the housing 12. As used herein, being refractory means having a property resistant to heat from a flame and being flame-retardant.

Thus, the battery pack 1 of the present embodiment has the advantage that a further simplified structure can reduce the concentration of gas in the housing 12.

### (2) Detailed Configuration

### (2-1) Battery Pack

With reference to FIGS. 1 to 9, details of the battery pack 1 according to the present embodiment will be described below.

The battery pack 1 is a direct-current power supply which supplies electric power for driving a motor 3 described later. The battery back 1 includes, for example, a chargeable and dischargeable secondary battery. As shown in FIG. 2, the battery pack 1 includes the battery cell 11, the housing 12, the gas absorbing member 13, the lateral surface-side space S1, and the electrode-side space S2 and additionally includes a battery pack-side connector 16, a cell case 17, fire protection meshes 18a and 18b, and insulation tapes 191a and 191b.

In the following description, a longitudinal direction (X direction in FIG. 1) of the housing 12 is defined as a forward/backward direction. Of surfaces of the housing 12 which are opposite from each other in the forward/backward direction, a surface provided with a slide button 123 described later is defined as being forward of a surface provided with no slide button 123. In other words, of the surfaces of the housing 12 which are opposite from each other in the forward/backward direction, the surface provided with no slide button 123 is defined as being backward of the surface provided with the slide button 123. Moreover, a short direction (Y direction in FIG. 1) of the housing 12 is defined as a left/right direction. An end surface 111a described later is defined as being rightward of an end surface 111b described later, and the end surface 111b is defined as being leftward of the end surface 111a (see FIG. 2). Moreover, a height direction (Z direction of FIG. 1) of the housing 12 is defined as an up/down direction. A first housing 121 described later is defined as being upward of a second housing 122 described later, and the second housing 122 is defined as being downward of the first housing 121. However, these definitions are not to define the directions of the battery pack 1 in use.

### (Battery Cell)

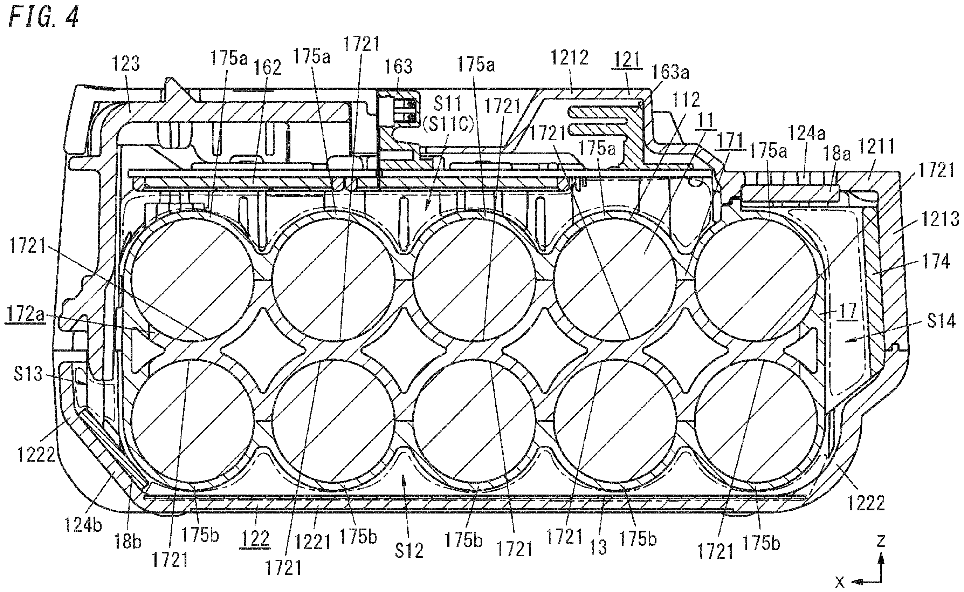

The present embodiment includes a plurality of battery cells 11. More specifically, the number of the battery cells 11 is 10 (see FIG. 4). As shown in FIG. 4, the plurality of battery cells 11 are aligned parallel to each other in an X-axis direction and a Z-axis direction and are accommodated in the cell case 17.

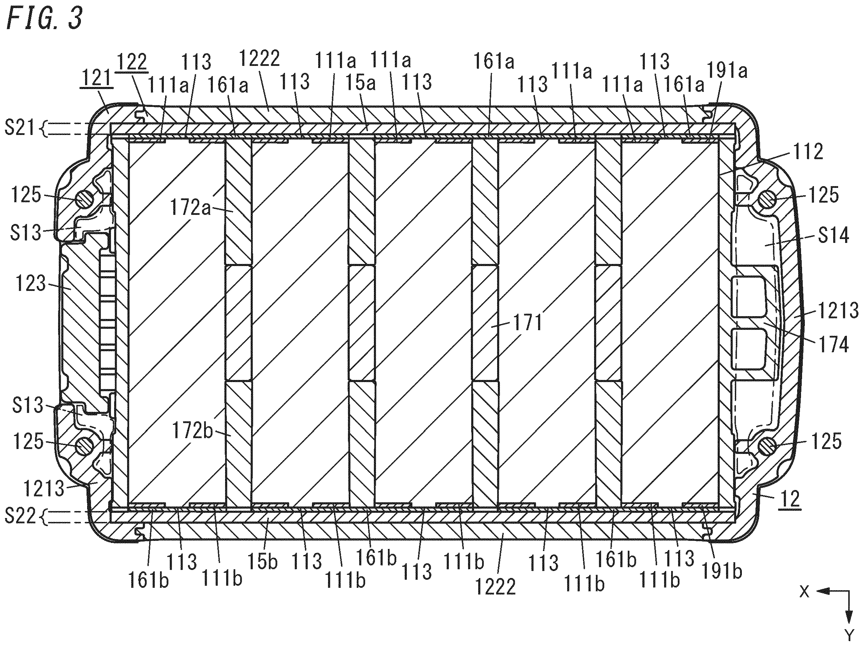

As shown in FIG. 2, each battery cell 11 in the present embodiment has a circular column shape. Each battery cell 11 has the end surfaces 111a and 111b each of which is, for example, circular and which are disposed on opposing sides in an axial direction of the battery cell 11 (the Y direction in FIG. 2). As shown in FIG. 3, each of the end surfaces 111a of the plurality of battery cells 11 on one side is perpendicular in the Y direction. Similarly, each of the end surfaces 111b of the plurality of battery cells 11 on the other side is perpendicular in the Y direction. That is, the plurality of battery cells 11 have the end surfaces 111a and the end surfaces 111b, which are perpendicular in the Y direction, on respective opposing sides in the Y direction.

As shown in FIG. 3, the end surfaces 111a and 111b of each battery cell 11 are provided with respective electrodes 113. Each electrode 113 is a portion which electrically connects a corresponding one of the battery cells 11 via the battery pack-side connector 16 described later to the power tool body 2. Each electrode 113 is either a positive electrode from which a current flows when the corresponding one of the battery cells 11 is discharged or a negative electrode to which a current flows when the corresponding one of the battery cells 11 is discharged. More specifically, one of the end surfaces 111a and 111b of each battery cell 11 is provided with a positive electrode and the other of the end surfaces 111a and 111b is provided with a negative electrode. Note that the plurality of battery cells 11 may be aligned such that positive electrodes are disposed on all of the end surfaces 111a and negative electrodes are disposed on all of the end surfaces 111b. Alternatively, the plurality of battery cells 11 may be aligned such that negative electrodes are disposed on all of the end surfaces 111a and positive electrodes are disposed on all of the end surfaces 111b. Still alternatively, the plurality of battery cells 11 may be aligned such that positive electrodes and negative electrodes are alternately disposed, one by one, on each of adjacent end surfaces 111a, which are on the same side, of the plurality of battery cells 11. Thus, positive electrodes and negative electrodes are alternately disposed, one by one, on each of adjacent end surfaces 111b, which are on the same side, of the plurality of battery cells 11.

Each battery cell 11 has the lateral surface 112 in a radial direction (the X direction and the Z direction in FIG. 2) thereof. The lateral surface 112 is a surface which each battery cell 11 has in addition to the end surfaces 111a and 111b. More specifically, the lateral surface 112 is a surface which is included in the surfaces of each battery cell 11 and which is provided with no electrode 113. Moreover, the lateral surface 112 of the present embodiment connects peripheral edges of the end surface 111a and the end surface 111b which are opposite from each other in the Y direction.

### (Cell Case)

As shown in FIGS. 2 and 4, the cell case 17 accommodates the plurality of battery cells 11. Specifically, the cell case 17 accommodates the plurality of battery cells 11 such that an inter-cell distance is maintained at a set distance determined in advance. As used herein, the inter-cell distance is a distance between two adjacent battery cells 11 of the plurality of battery cells 11 in the X direction or the Z direction. Thus, the cell case 17 suppresses each of the plurality of battery cells 11 from being influenced by heat generated by battery cells 11 adjacent thereto. Moreover, the set distance is empirically determined, and when the set distance is greater than or equal to 2.0 mm, fire from a battery cell 11 is suppressed from spreading to, and burning, another battery cell 11. In the present embodiment, the set distance is set to 3.0 mm on the grounds that as the set distance increases, the size of the battery pack 1 increases.

As shown in FIG. 2, the cell case 17 of the present embodiment includes a first cell case 171 and second cell cases 172a and 172b. The battery cells 11 are secured by being held by the one first cell case 171 and the second cell cases 172a and 172b. Note that the one first cell case 171 and the second cell cases 172a and 172b are made of, for example, a synthetic resin having an excellent electrical insulation property.

As shown in FIG. 2, the first cell case 171 is in the shape of a rectangular parallelepiped which has a left surface and a right surface each having a substantially rectangular shape with rounded corners. The first cell case 171 has a hollow therein, and the first cell case 171 accommodates the plurality of battery cells 11. This will be described in further detail. The left surface and the right surface of the first cell case 171 have openings, and the first cell case 171 has the hollow therein. The first cell case 171 has an inner surface which defines the hollow and which has a plurality of semicylindrical recesses. As shown in FIG. 4, the first cell case 171 thus accommodates the plurality of battery cells 11 along the plurality of semicylindrical recesses.

As shown in FIG. 4, the first cell case 171 of the present embodiment has an upper surface having a plurality of semicylindrical projections 175a along the plurality of semicylindrical recesses formed in the inner surface of the first cell case 171. Similarly, the first cell case 171 of the present embodiment has a lower surface having a plurality of semicylindrical projections 175b along the plurality of semicylindrical recesses formed in the inner surface of the first cell case 171. In the present embodiment, five projections 175a are aligned in the X direction on the upper surface of the first cell case 171, and five projections 175b are aligned in the X direction on the lower surface of the first cell case 171.

As shown in FIG. 5, the upper surface of the first cell case 171 is provided with partition walls 173a and 173b which hold a substrate 162 described later. The partition walls 173a and 173b protrude in the upward direction. The partition walls 173a and 173b thus partition a space between an inner surface of the housing 12 and the lateral surfaces 112 of the plurality of battery cells 11. Moreover, as shown in FIG. 3 or 4, the first cell case 171 has a rear surface having a ventilation hole 174 via which a second lateral surface-side space S12 described later and a gas vent hole 124a described later are communicated.

Each of the second cell cases 172a and 172b is in the shape of a substantially rectangular parallelepiped. The second cell case 172a has an upper surface and a lower surface each having housing surfaces 1721 which houses the battery cells 11. Each housing surface 1721 is curved along the lateral surface 112 of a corresponding one of the battery cells 11. In the present embodiment, five housing surfaces 1721 are aligned in the X direction at each of the upper surface and the lower surface of the second cell case 172a as shown in FIG. 4. That is, the second cell case 172a has ten housing surfaces 1721. The second cell case 172a houses the battery cells 11 on the housing surfaces 1721 one by one. That is, the second cell case 172a of the present embodiment houses ten battery cells 11 on the ten housing surfaces 1721 of the second cell case 172a.

Similarly, the second cell case 172b has an upper surface and a lower surface each having housing surfaces 1721 (see FIG. 2). In the present embodiment, five housing surfaces 1721 are aligned in the X direction at each of the upper surface and the lower surface of the second cell case 172b. That is, the second cell case 172b has ten housing surfaces 1721. The second cell case 172b houses the battery cells 11 on the housing surfaces 1721 one by one. That is, the second cell case 172b of the present embodiment houses ten battery cells 11 on the ten housing surfaces 1721 of the second cell case 172a.

The second cell cases 172a and 172b maintain the inter-cell distance at the set distance determined in advance. More specifically, the housing surfaces 1721 of the second cell cases 172a and 172b house the battery cells 11 such that the inter-cell distance is maintained at the set distance predetermined in advance.

Moreover, the second cell cases 172a and 172b are, together with the plurality of battery cells 11, accommodated in the first cell case 171. The second cell case 172a is disposed on the right in the first cell case 171. Similarly, the second cell case 172b is disposed on the left in the first cell case 171.

### (Housing)

The housing 12 houses the battery cells 11. More specifically, the housing 12 houses the battery cells 11 accommodated in the cell case 17 as shown in FIGS. 3 to 5. As shown in FIG. 2, the housing 12 of the present embodiment includes the first housing 121, the second housing 122, the slide button 123, the gas vent holes 124a and 124b, and a fixing screw 125. Through the gas vent holes 124a and 124b, gas is discharged outside. Note that the total number of the gas vent holes 124a and 124b in the present embodiment is, but not limited to, two. For example, either of the gas vent hole 124a or 124b may be provided, or three or more gas vent holes in total may be provided.

As shown in FIG. 4, the first housing 121 includes a first bottom part 1211, a fitting part 1212, and a first side part 1213. The first bottom part 1211 has a substantially rectangular shape. A thickness direction defined with respect to the first bottom part 1211 is along the up/down direction. In the present embodiment, the first bottom part 1211 has a rear portion having the gas vent hole 124a. The first bottom part 1211 has a front portion having the fitting part 1212. The fitting part 1212 is to be fitted to the power tool body 2 described later. The battery pack 1 is thus attachable to the power tool body 2. The fitting part 1212 has a groove (not shown) to be fitted to the power tool body 2. Moreover, the fitting part 1212 has a center part having a through hole into which a connection terminal 163 described later is to be inserted. The first side part 1213 protrudes from the first bottom part 1211. More specifically, the first side part 1213 protrudes from a peripheral edge of the first bottom part 1211. The first side part 1213 protrudes from the first bottom part 1211 in the downward direction.

As shown in FIG. 4, the second housing 122 has a second bottom part 1221 and a second side part 1222. The second bottom part 1221 has a substantially rectangular shape. A thickness direction defined with respect to the second bottom part 1221 is along the up/down direction. The second side part 1222 protrudes from the second bottom part 1221. More specifically, the second side part 1222 protrudes from a peripheral edge of the second bottom part 1221. The second side part 1222 protrudes from the second bottom part 1221 in the upward direction. The second side part 1222 is joined to the first side part 1213. In the present embodiment, the second side part 1222 has the gas vent hole 124b opening frontward.

The slide button 123 is provided to at least one of the first side part 1213 or the second side part 1222. For example, the slide button 123 is disposed on the front of the first side part 1213 as shown in FIG. 1. Giving an operation to the slide button 123 releases a fit connection between the battery pack 1 and the power tool body 2 described later. The battery pack 1 is thus detachable from the power tool body 2.

The fixing screw 125 fixes the first housing 121 and the second housing 122 to each other. More specifically, the fixing screw 125 fixes the first housing 121 and the second housing 122 to each other such that a state where the first side part 1213 and the second side part 1222 are joined to each other is maintained. The present embodiment includes four fixing screws 125 (see FIG. 3), but the number of fixing screws is not limited to four.

As shown in FIG. 5, the battery pack 1 includes: the lateral surface-side space S1 which is a space between the housing 12 and the lateral surfaces 112 of the plurality of battery cells 11; and the electrode-side space S2 which is a space between the housing 12 and the end surfaces 111 of the plurality of battery cells 11.

The lateral surface-side space S1 is a space between the inner surface of the housing 12 and the lateral surfaces 112 of the plurality of battery cells 11. The present embodiment includes a plurality of lateral surface-side spaces S1. More specifically, the plurality of lateral surface-side spaces S1 include a first lateral surface-side space S11, a second lateral surface-side space S12, a third lateral surface-side space S13, and a fourth lateral surface-side space S14 as shown in FIG. 4.

Of the plurality of lateral surface-side spaces S1, the first lateral surface-side space S11 is a space above the plurality of battery cells 11. More specifically, since the battery cells 11 are accommodated in the first cell case 171, the first lateral surface-side space S11 is a space between the upper surface of the first cell case 171 and the first housing 121. The battery pack 1 of the present embodiment has, as the first lateral surface-side space S11, three first lateral surface-side spaces S11a, S11b, and S11c partitioned by the partition walls 173a and 173b. Thus, each of the first lateral surface-side spaces S11a, S11b, and S11c has a smaller space volume than the second lateral surface-side space S12. This will be described in further detail. The first lateral surface-side space S11a is a space surrounded by a portion of the first cell case 171 located leftward of the partition wall 173a, the first bottom part 1211 of the first housing 121, and the partition wall 173a. Similarly, the first lateral surface-side space S11b is a space surrounded by a portion of the first cell case 171 located rightward of the partition wall 173b, the first bottom part 1211 of the first housing 121, and the partition wall 173b. The first lateral surface-side space S11c is a space surrounded by a center part of the first cell case 171 located between the partition wall 173a and the partition wall 173b, the fitting part 1212 of the first housing 121, the partition wall 173a, and the partition wall 173b.

Of the plurality of lateral surface-side spaces S1, the second lateral surface-side space S12 is a space below the plurality of battery cells 11. More specifically, the battery cells 11 are accommodated in the first cell case 171, and therefore, the second lateral surface-side space S12 is a space between the lower surface of the first cell case 171 and the second housing 122 as shown in FIG. 5.

Of the plurality of lateral surface-side spaces S 1, the third lateral surface-side space S 13 is a space in front of the plurality of battery cells 11. More specifically, the battery cells 11 are accommodated in the first cell case 171, and therefore, the third lateral surface-side space S13 is a space surrounded by a front surface of the first cell case 171, the first housing 121, and the second housing 122 as shown in FIGS. 3 and 4.

Of the plurality of lateral surface-side spaces S1, the fourth lateral surface-side space S 14 is a space behind the plurality of battery cells 11. This will be more specifically described. The battery cells 11 are accommodated in the first cell case 171, and the first cell case 171 has the ventilation hole 174. As shown in FIGS. 3 and 4, the fourth lateral surface-side space S14 is thus a space which is surrounded by the rear surface of the first cell case 171, the first housing 121, and the second housing 122 and which is provided with the ventilation hole 174.

The electrode-side space S2 of the present embodiment is a space between the end surface 111a or the end surface 111b and the inner surface of the housing 12. This will be described in further detail. As shown in FIG. 5, the electrode-side space S2 includes a first electrode-side space S21 and a second electrode-side space S22. The first electrode-side space S21 is a space between the first housing 121 or the second housing 122 and the plurality of end surfaces 111a provided with the electrodes 113. Similarly, the second electrode-side space S22 is a space between the first housing 121 or the second housing 122 and the plurality of end surfaces 111b provided with the electrodes 113.

### (Gas Absorbing Member)

The gas absorbing member 13 is disposed, as described above, in the housing 12, in at least one of the lateral surface-side spaces S1 or a space between the housing 12 and the intervention member 14 disposed in the electrode-side space S2. In the present embodiment, the gas absorbing member 13 is disposed in the one of the lateral surface-side spaces S1 as shown in FIG. 5. More specifically, the gas absorbing member 13 is disposed at least in a space, having a largest space volume, of the plurality of lateral surface-side spaces S1. Gas is present more in a space having a large space volume than in a space having a small space volume. Therefore, a gas absorbing member disposed in a space having a large space volume can efficiently absorb the gas. In the present embodiment, the space, having the largest space volume, of the plurality of lateral surface-side spaces S1 is the second lateral surface-side space S12.

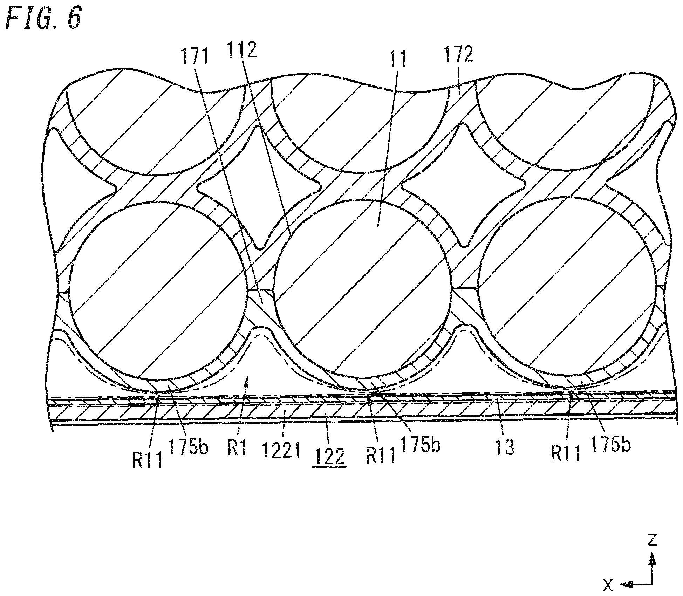

The battery pack 1 further includes a gas discharge path R1 (see FIG. 6) which guides gas to the gas vent holes 124a and 124b. The gas absorbing member 13 is disposed in the gas discharge path R1. In the present embodiment, when gas is generated in, and leaks out of, any of the battery cells 11, the gas passes through the lateral surface-side space S1 and the electrode-side space S2 which are the gas discharge path R1, and the gas is then discharged outside through the gas vent holes 124a and 124b. Thus, the gas absorbing member 13 of the present embodiment is disposed in the lateral surface-side space S1 of the lateral surface-side space S1 and the electrode-side space S2 which are the gas discharge path R1. More specifically, the gas absorbing member 13 of the present embodiment is disposed in the second lateral surface-side space S12 as shown in FIG. 4. Note that the gas absorbing member 13 may be disposed in the electrode-side space S2 of the lateral surface-side space S1 and the electrode-side space S2 which are the gas discharge path R1.

The gas discharge path R1 has a narrowed portion R11 where a path through which the gas passes is narrowed at a location at which the gas absorbing member 13 is disposed. More specifically, the gas discharge path R1 of the present embodiment has a plurality of narrowed portions R11 formed by the semicylindrical projections 175b on the lower surface of the first cell case 171 and the second bottom part 1221 of the second housing 122 as shown in FIG. 6. At each narrowed portion R11, the gas is pressed against the gas absorbing member 13 with a higher pressure than in the other portions in the gas discharge path R1. As a result, part of the gas absorbing member 13 at each narrowed portion R11 absorbs more gas than the other parts of the gas absorbing member 13 in the gas discharge path R1.

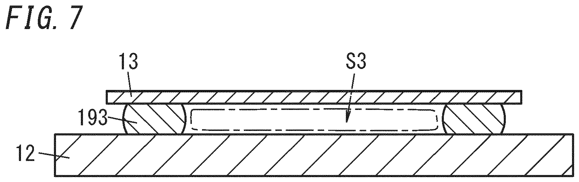

The gas absorbing member 13 of the present embodiment has a sheet shape. As shown in FIG. 7, the gas absorbing member 13 is disposed on the inner surface of the housing 12 by a fixing part 193 such that a gap space S3 is provided between the inner surface of the housing 12 and the gap absorbing member 13. The gap space S3 enables gas to be absorbed also by a back surface of the gas absorbing member 13 having the sheet shape, and therefore, the gas can be efficiently absorbed. The fixing part 193 is, for example, a double-sided tape.

### (Refractory Member)

The battery pack 1 further includes refractory members 15a and 15b which are more refractory than the housing 12. As shown in FIG. 5, the refractory members 15a and 15b are disposed in the electrode-side space S2. Moreover, each of the refractory members 15a and 15b of the present embodiment has a substantially rectangular shape with rounded corners. As shown in FIG. 3, the refractory members 15a and 15b are disposed in the periphery of the electrodes 113 of the plurality of battery cells 11. More specifically, the refractory member 15a is disposed between a set of the first side part 1213 and the second side part 1222 and a set of the end surfaces 111a of the plurality of battery cells 11. The refractory member 15b is disposed between the set of the first side part 1213 the second side part 1222 and a set of the end surfaces 111b of the plurality of battery cells 11. The refractory members 15a and 15b suppress heat generated by the electrodes 113 from being transmitted to the housing 12, the gas absorbing member 13, and the like which are members included in the battery pack 1. Moreover, each of the refractory members 15a and 15b is made of, for example, a silica fiber. Note that the refractory members 15a and 15b may be highly refractory metal such as stainless steel or alumina.

### (Battery Pack-side Connector)

The battery pack-side connector 16 is electrically, and detachably, connected to a body-side connector 21 of the power tool body 2 to supply electric power to the power tool body 2. As shown in FIG. 2, the battery pack-side connector 16 includes metal plates 161a and 161b, a substrate 162, and a plurality of connection terminals 163. The plurality of connection terminals 163 are mounted on the substrate 162. The substrate 162 of the present embodiment is supported by the partition walls 173a and 173b. The plurality of connection terminals 163 are portions to be electrically, and detachably, connected to respective terminals of the body-side connector 21. The plurality of connection terminals 163 include power supply terminals 163a. The power supply terminals 163a are terminals which are electrically connected to the electrodes 113 of the plurality of battery cells 11 via the metal plates 161a and 161b and via which electric power charged in the plurality of battery cells 11 is output.

### (Fire Protection Mesh)

The fire protection meshes 18a and 18b include a plurality of metal mesh sheets and a plurality of fiber sheets. Each metal mesh sheet is made of, for example, a stainless steel material. Each fiber sheet is, for example, a ceramic fiber sheet or an alumina sheet.

In the present embodiment, the fire protection mesh 18a is disposed on an inner surface of part, provided with the gas vent hole 124a, of the first bottom part 1211. More specifically, the fire protection mesh 18a is disposed on a surface of part, provided with the gas vent hole 124a, of the first bottom part 1211 as shown in FIG. 4, the surface facing the battery cell 11. The fire protection mesh 18b is disposed on an inner surface of part, provided with the gas vent hole 124b, of the second side part 1222. More specifically, the fire protection mesh 18b is disposed on a surface of part, provided with the gas vent hole 124b, of the second side part 1222, the surface facing the battery cell 11. Each of the fire protection meshes 18a and 18b has a function of suppressing a flame from passing. Moreover, the total number of the fire protection meshes 18a and 18b in the present embodiment is, but not limited to, two. For example, either the fire protection mesh 18a or 18b may be disposed, or three or more fire protection meshes in total may be disposed.

### (Insulation Tape)

The insulation tapes 191a and 191b are members which prevent adjacent battery cells 11 from being electrically connected to each other. Each of the insulation tapes 191a and 191b is made of an insulating material. Each of the insulation tapes 191a and 191b has, for example, a rectangular shape with rounded corners. The insulation tape 191a has a plurality of (in FIG. 2, ten) connection holes 1911 for electrically connecting the electrodes 113 of the battery cells 11 to the metal plate 161a. Similarly, the insulation tape 191b has a plurality of connection holes 1911 for electrically connecting the electrodes 113 of the battery cells 11 to the metal plate 161b. In the present embodiment, the insulation tape 191a is held between the metal plate 161a and the end surfaces 111a of the battery cells 11 such that the electrodes 113 provided on the end surfaces 111a can pass through the connection holes 1911 and be electrically connected to the metal plate 161a as shown in FIG. 3. Similarly, the insulation tape 191b is held between the metal plate 161b and the end surfaces 111b of the battery cell 11 such that the electrodes 113 provided on the end surfaces 111b can pass through the connection holes 1911 and be electrically connected to the metal plate 161b.

### (2-2) Power Tool

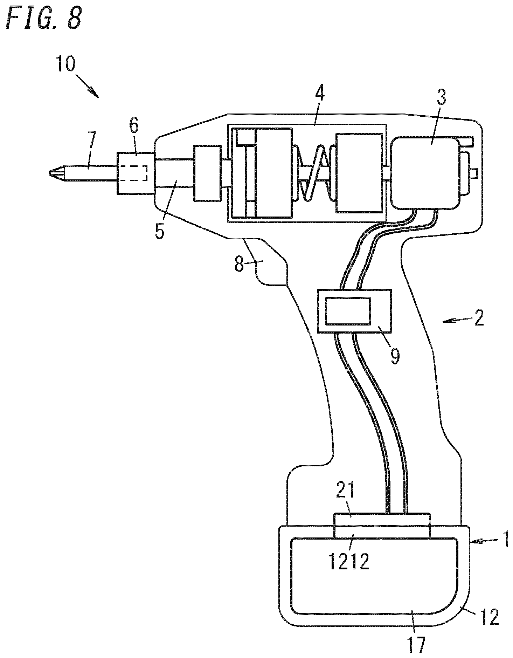

With reference to FIG. 8, a detailed configuration of a power tool 10 including the battery pack 1 according to the embodiment will be described below.

As shown in FIG. 8, the power tool 10 includes the battery pack 1 and the power tool body 2. The power tool body 2 operates with electric power supplied from the battery pack 1. The power tool body 2 includes the motor 3, a drive transmission portion 4, an output shaft 5, a chuck 6, a tip tool 7, a trigger 8, a controller 9, and the body-side connector 21.

The motor 3 is a drive source configured to drive the tip tool 7. The battery pack 1 is detachably attached to the power tool body 2. The battery pack 1 attached to the power tool body 2 is electrically connected to the body-side connector 21 provided on the power tool body 2. The battery pack 1 supplies electric power via the body-side connector 21 to the power tool body 2.

The drive transmission portion 4 decelerates, and outputs, the output (driving force) from the motor 3 to the output shaft 5. The output shaft 5 is a portion driven (e.g., rotated) by a driving force output from the drive transmission portion 4. The chuck 6 is a portion which is fixed to the output shaft 5 and to which the tip tool 7 is detachably attached. The tip tool 7 (also referred to as a bit) has a shape according to an application such as a screwdriver, a socket wrench, or a drill. A tip tool 7 of various types of tip tools 7 according to the application is used by being attached to the chuck 6.

The trigger 8 is an operating member for operating the rotational velocity of the motor 3. The trigger 8 is configured to switch ON or OFF the motor 3. Moreover, the rotational velocity of the output shaft 5 per unit time, that is, the rotational velocity of the motor 3 is adjustable by the amount of an operation given to the trigger 8. The controller 9 drives or stops the motor 3, and also controls the rotational velocity of the motor 3 in response to the operation given to the trigger 8.

### (3) Variations

The embodiment described above is a mere example of various embodiments of the present disclosure. The embodiment described above may be readily modified in various manners depending on design without departing from the scope of the present disclosure. Variations below may be embodied in combination.

In the present embodiment, the gas absorbing member 13 is disposed in the lateral surface-side space S1, and the refractory members 15a and 15b are disposed in the electrode-side space S2. However, the gas absorbing member 13 is not disposed in the lateral surface-side space S1 but may be disposed in a space between the housing 12 and the intervention member 14 disposed in the electrode-side space S2. That is, the gas absorbing member 13 may be disposed in a space between the inner surface of the housing 12 and the intervention member 14 which is disposed between the housing 12 and the end surfaces 111.

More specifically, the intervention member 14 is disposed between the first side part 1213 or second side part 1222 and the plurality of end surfaces 111a as shown in FIG. 9. The gas absorbing member 13 is disposed in a space between the intervention member 14 and the first side part 1213 or the second side part 1222. Similarly, the intervention member 14 is disposed between the first side part 1213 or second side part 1222 and the plurality of end surface 111b. The gas absorbing member 13 is disposed in a space between the intervention member 14 and the first side part 1213 or the second side part 1222. Thus, the gas absorbing member 13 is prevented from being disposed at a location where the gas absorbing member 13 is in direct contact with the electrodes 113. Note that the intervention member 14 is made of a refractory material which is more refractory than the housing 12. The intervention member 14 may be made of, for example, silica fiber, or may be made of highly refractory metal such as stainless steel.

Note that gas absorbing members 13 may be disposed in the lateral surface-side space S1 and in a space between the housing 12 and the intervention member 14 disposed in the electrode-side space S2.

Moreover, the present embodiment includes ten battery cells 11, but the number of battery cells 11 is not limited to this example. Note that the second cell case 172a has the same number of housing surfaces 1721 as the number of battery cells 11. For example, when the number of battery cells 11 is eight, the second cell case 172a has eight housing surfaces 1721.

Moreover, each battery cell 11 of the present embodiment has a circular column shape, but each battery cell 11 may be in the shape of a rectangular parallelepiped. In this case, each battery cell 11 has, for example, rectangular end surfaces. Note that each battery cell 11 may be pin-shaped.

Moreover, each battery cell 11 of the present embodiment has two end surfaces 111 as surfaces provided with the electrodes 113. However, the battery cell 11 has at least one or more end surfaces 111 as surfaces provided with the electrodes 113. For example, both a positive electrode and a negative electrode which are the electrodes 113 are disposed on the end surface 111a, and no electrode 113 may be disposed on the end surface 111b. In this case, the end surface 111b is provided with no electrode 113, and therefore, the refractory member 15b and the intervention member 14 which suppress transmission of heat generated by the electrode 113 are disposed in only the first electrode-side space S21 but do not have to be disposed in the second electrode-side space S22.

Similarly, both a positive electrode and a negative electrode are disposed on the end surface 111b, and no electrode 113 may be disposed on the end surface 111a. In this case, no electrode 113 is disposed on the end surface 111a, and therefore, the refractory member 15a and the intervention member 14 which suppress transmission of heat generation by the electrode 113 are be disposed only in the second electrode-side space S22 but do not have to be disposed in the first electrode-side space S21.

Moreover, each battery cell 11 of the present embodiment has, as surfaces provided with the electrodes 113, the end surfaces 111 on both sides in the axial direction (the Y direction in FIG. 2) of the battery cell 11. However, the direction in which each battery cell 11 has a surface provided with the electrode 113 is not limited. For example, each battery cell 11 may have a surface provided with the electrode 113 in a direction along the radial direction (XZ plane of FIG. 2) of the battery cell 11.

### (Summary)

As explained above, a battery pack (1) of a first aspect includes a battery cell (11), a housing (12), a gas absorbing member (13), a lateral surface-side space (S1), and an electrode-side space (S2). The battery cell (11) has an end surface (111) and a lateral surface (112), and electrodes (113)are disposed on the end surface (111). The housing (12) houses the battery cell (11). The gas absorbing member (13) is configured to absorb gas. The lateral surface-side space (S1) is a space between the lateral surface (112) and the housing (12). The electrode-side space (S2) is a space between the end surface (111) and the housing (12). The gas absorbing member (13) is disposed, in the housing (12), in at least one of the lateral surface-side space (S1) or a space between the housing (12) and an intervention member (14) disposed in the electrode-side space (S2).

This aspect provides the advantage that a further simplified structure enables the concentration of gas in the housing (12) to be reduced.

In a battery pack (1) of a second aspect referring to the first aspect, the gas absorbing member (13) is disposed in the lateral surface-side space (S1).

This aspect has the advantage that the concentration of gas in the lateral surface-side space (S1) can be reduced.

A battery pack (1) according to a third aspect referring to the second aspect further includes a refractory member (15a, 15b) which is more refractory than the housing (12). The refractory member (15a, 15b) is disposed in the electrode-side space (S2).

This aspect has the advantage that the housing (12) is prevented from being directly in contact with the electrodes (113).

In a battery pack (1) of a fourth aspect referring to any one of the first to third aspects, the battery pack (1) includes a plurality of the lateral surface-side spaces (S1). The gas absorbing member (13) is disposed at least in a space, having a largest space volume, of the plurality of lateral surface-side space (S1).

This aspect has the advantage that the concentration of the gas in the housing (12) can efficiently be reduced.

In a battery pack (1) of a fifth aspect referring to any one of the first to fourth aspects, the intervention member (14) is made of a refractory material which is more refractory than the housing (12).

This aspect has the advantage that the gas absorbing member (13) can be prevented from being disposed at a location where the gas absorbing member (13) is in direct contact with the electrode (113).

In a battery pack (1) of a sixth aspect referring to any one of the first to fifth aspects, the housing (12) has a gas vent hole (124a, 124b) through which the gas is discharged outside. The battery pack (1) of the sixth aspect further includes a gas discharge path (R1) configured to guide the gas to the gas vent hole (124a, 124b). The gas absorbing member (13) is disposed in the gas discharge path (R1).

This aspect has the advantage that the gas absorbing member (13) can efficiently absorb the gas passing through the gas discharge path (R1).

In a battery pack (1) of a seventh aspect referring to the sixth aspect, the gas discharge path (R1) has a narrowed portion (R11) where a path through which the gas passes is narrowed at a location at which the gas absorbing member (13) is disposed.

This aspect has the advantage that the gas absorbing member (13) can efficiently absorb the gas passing through the gas discharge path (R1).

A battery pack (1) of an eighth aspect referring to any one of the first to seventh aspects, the gas absorbing member (13) has a sheet shape.

This aspect has the advantages that the gas absorbing member (13) is disposed at an arbitrary location in the housing (12).

In a battery pack (1) of a ninth aspect referring to the eighth aspect, the gas absorbing member (13) is disposed such that a gap space (S3) is provided between an inner surface of the housing (12) and the gas absorbing member (13).

This aspect has the advantage that gas can be absorbed also by a back surface of the gas absorbing member (13), and the gas can thus be efficiency absorbed.

A battery pack (1) of a tenth aspect referring to any one of the first to ninth aspects, the gas is an inflammable gas.

This aspect has the advantage that the inflammable gas can be discharged outside the battery pack (1) while the concentration of the inflammable gas is reduced.

A power tool(10) of an eleventh aspect includes the battery pack (1) of any one of the first to tenth aspects and a power tool body (2). The power tool body (2) is configured to operate with electric power supplied from the battery pack (1).

This aspect has the advantages that the power tool(10) having the effect of the battery pack (1) can be provided.

### Reference Signs List

- 10: Power Tool
- 1: Power Tool Battery Pack
- 11: Battery Cell
- 111: End Surface
- 112: Lateral Surface
- 113: Electrode
- 12: Housing
- 124a, 124b: Gas vent hole
- 13: Gas Absorbing Member
- 14: Intervention Member
- 15a, 15b: Refractory Member
- 2: Power Tool Body
- S1: Lateral Surface-Side Space
- S2: Electrode-Side Space
- S3: Gap Space
- R1: Gas Discharge Path
- R11: Narrowed Portion

## Claims

1. A power tool battery pack, the battery pack comprising:
a battery cell having an end surface and a lateral surface, the end surface being provided with electrodes;
a housing housing the battery cell;
a gas absorbing member configured to absorb gas;
a lateral surface-side space which is a space between the lateral surface and the housing; and
an electrode-side space which is a space between the end surface and the housing,
the gas absorbing member being disposed, in the housing, in at least one of the lateral surface-side space or a space between the housing and an intervention member in the electrode-side space.

2. The power tool battery pack of claim 1, wherein
the gas absorbing member is disposed in the lateral surface-side space.

3. The power tool battery pack of claim 2, further comprising a refractory member which is more refractory than the housing, wherein
the refractory member is disposed in the electrode-side space.

4. The power tool battery pack of any one of claims 1 to 3, wherein
the power tool battery pack includes a plurality of the lateral surface-side spaces, and
the gas absorbing member is disposed in at least a space, having a largest space volume, of the plurality of lateral surface-side spaces.

5. The power tool battery pack of any one of claims 1 to 4, wherein
the intervention member is made of a refractory material which is more refractory than the housing.

6. The power tool battery pack of any one of claims 1 to 5, wherein
the housing has a gas vent hole through which the gas is discharged outside,
the battery pack further includes a gas discharge path configured to guide the gas to the gas vent hole, and
the gas absorbing member is disposed in the gas discharge path.

7. The power tool battery pack of claim 6, wherein
the gas discharge path has a narrowed portion where a path through which the gas passes is narrowed at a location at which the gas absorbing member is disposed.

8. The power tool battery pack of any one of claims 1 to 7, wherein
the gas absorbing member has a sheet shape.

9. The power tool battery pack of claim 8, wherein
the gas absorbing member is disposed such that a gap space is provided between an inner surface of the housing and the gas absorbing member.

10. The power tool battery pack of any one of claims 1 to 9, wherein
the gas is an inflammable gas.

11. A power tool comprising:
the power tool battery pack of any one of claims 1 to 10; and
a power tool body configured to operate with electric power supplied from the battery pack.
